# EUROPEAN PATENT SPECIFICATION

(11) **EP 1 125 500 B1**
(45) Date of publication and mention of the grant of the patent: **16.04.2003**
(21) Application number: 01111979.9
(22) Date of filing: 06.05.1998
(51) Int. Cl.: A22B 5/00

(54) **Tool, device and method for pre-cutting the tenderloin**
Gerät, Vorrichtung und Verfahren zum Vorschneiden eines Schlachttierfilets
Outil, dispositif et procédé de prédécoupe du filet

(30) Priority: 06.05.1997 DK 52097; 20.01.1998 DK 6798; 03.04.1998 DK 47098
(43) Date of publication of application: 22.08.2001
(62) Divisional of application: 98303526.2
(73) Proprietor: Slagteriernes Forskningsinstitut, 4000 Roskilde (DK)
(72) Inventor: Nielsen, Jens Ulrich, 2880 Bagsvaerd (DK); Druekaer, Arne, 3630 Jaegerspris (DK)
(74) Representative: Bayliss, Geoffrey Cyril

(56) References cited:
- EP-A- 0 392 874
- DE-A- 3 039 241

## Description

The present invention relates to a tool, device and method for pre-cutting the tenderloin.

In the processing of pig carcasses on a slaughter line an operator opens the carcass in the abdomen and breast and removes the viscera from the carcass. Then, the operator pre-cuts the tenderloin. He cuts along a first side of the spinal column and then along a second side so that the two incisions form a "X". After chilling of the carcass an operator can pull out the pre-cut tenderloin.

The method is inconvenient to use in automatic processing of carcasses, e.g. in the automatic evisceration processes described in EP 0856 257 A2 and EP 0879 558 A2 (Slagteriernes Forskningsinstitut). The manual pre-cutting will interfere with the automatic processes.

DE-A-3039241 discloses a device in the form of a hand-held boning knife for free-cutting of ribs from a loin. There is no disclosure of using the knife in a device or machine to pre-cut meat from the spinal column of a carcass which is a different area of meat treatment

The object of the present invention is to provide a tool which can be used for automatic pre-cutting the tenderloin in a carcass.

The tool according to the invention is characterised in that it comprises a knife with a profiled blade.

The tool may further comprise a holder which has a drive unit connected to the knife by means of which unit the knife can be moved between an advanced and a retracted position in relation to the holder.

The knife may be fixed to the holder by means of a hinge part and the drive unit may be mounted between the holder and the knife at a distance from the hinge part.

The blade is preferably bent at an angle, or at the least the central part of the blade may be curved, preferably as a circular arc.

The holder preferably has a stop face arranged in front of the knife seen in its direction of movement when pre-cutting the tenderloin from the spinal column.

Preferably the holder has a contact face arranged in front of the knife and lying substantially perpendicular to the knife's direction of movement during pre-cutting.

The device according to the invention is characterised in that it comprises a knife with a profiled blade, a knife holder with a drive unit by means of which unit the knife can be moved between an advanced and a retracted position in relation to the holder, and a device attached to the holder which device is arranged to move the tool comprising the knife and holder in a mainly vertical direction.

The device may be arranged to halt its movement in the mainly vertical direction when the tool moving in the vertical direction meets an obstruction exerting a greater reaction force than its pre-cutting force (i.e. when it meets the diaphragm).

The method according to the invention is characterised in that a knife with a profiled blade is moved in against the spinal column of the carcass until it has cut into the fleshy and connective tissue on two sides of the spinal column, that the knife is moved along the spinal column in the direction of the carcass head, while being pressed against the spinal column and that the movement along the spinal column continues until the tenderloin is pre-cut.

The knife may be moved while mounted on a holder with a stop face, and the movement along the spinal column may continue until the stop face meets resistance from the carcass diaphragm.

The knife may be moved to its retracted position after pre-cutting and in its retracted position continue its movement along the spinal column while tools carries out processing operations on the carcass viscera.

Pre-cutting of the tenderloin is preferably started after the intestines have been loosened from the carcass spinal column and are hanging out of the abdominal cavity.

A preferred embodiment of the method consists of the diaphragm and leaf fat of the carcass being loosened directly after the knife has concluded pre-cutting along the spinal column. To carry out the loosening a hoop device is preferably used with an internal diameter sufficiently large to permit the hoop device to pass the knife and associated pressing device when the hoop device is moved up to the rear end of the carcass.

The invention is mainly described in connection with the evisceration of pig carcasses. The invention may however be applied to carcasses from other animals, such as cattle (including cows, heifers, calves and bulls), sheep and goats.

The invention is described in detail in the following with reference to the drawings in which
- fig. 1 shows a tool for pre-cutting the tenderloin in a carcass,
- fig. 2 shows a first embodiment of a knife for use in the tool according to fig. 1, seen along the blade of the knife,
- fig. 3 shows a second embodiment of a knife,
- fig. 4 shows a third embodiment of a knife,
- fig. 5 shows the essential tools in a device for automatic removal of organs and pre-cutting the tenderloin,
- fig. 6 shows a tool used in the device with a set of hoops for loosening the diaphragm and leaf fat.

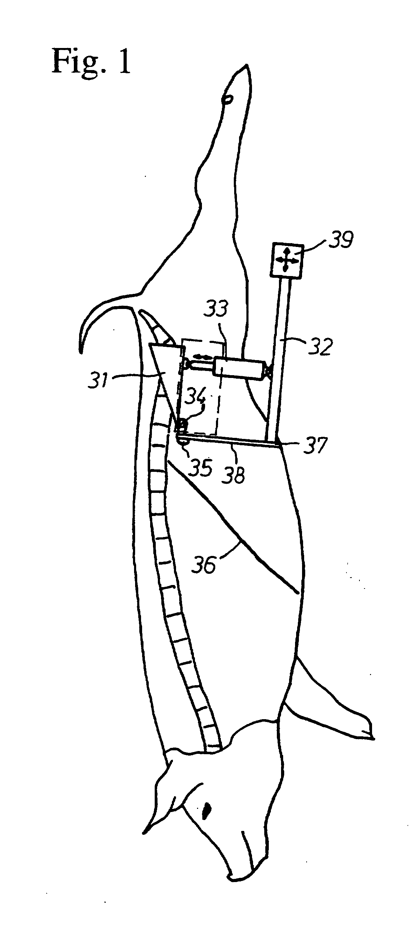

The tool for pre-cutting the tenderloin (fig. 1) comprises a knife 31 and a knife holder 32. Between the knife and the holder is a hydraulic or pneumatic cylinder unit 33. The knife is also attached to the holder by means of a hinge part 34. The cylinder unit 33 serves to swing the knife between a retracted position in a housing or a sheath, indicated by stippled lines in fig. 1, and an advanced cutting position, in which the unit presses the knife against the spinal column (e.g. in a yielding fashion), so that the track of the knife is automatically adapted to the profile of the spine.

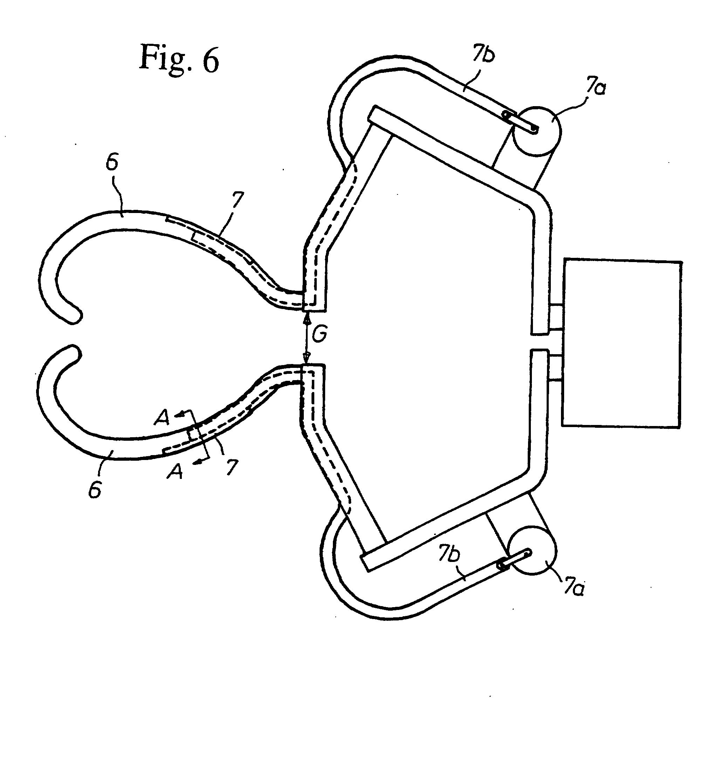

The holder 32 has on its underside a stop face 35, which is designed to halt the downwards movement of the tool when the surface meets the diaphragm 36 in the carcass. The holder also has a holding device 37 in the form of a hoop (cf. Danish design registration no. 63-1981), a plate or other device suitable for use as a holding device. Surface 38 acts as a contact face in loosening the diaphragm and leaf fat. The operation is carried out by means of a loosening tool (fig. 6) immediately after the tenderloin has been pre-cut by knife 31.

By means of arrangements not shown, the tool in fig. 1 can be moved in towards and down along the spinal column of the carcass. The arrangements are shown schematically in the form of a box 39. They can move the holder 32 in the directions shown by arrows. The arrangements are so devised that the motion of the tool down along the spinal column will be halted when stop face 35 meets the diaphragm 36 and stretches it.

The holder 32 thus serves three purposes: it is used to move the knife 31 in relation to the carcass, to halt the movement of the knife when the stop face 35 meets the diaphragm after the tenderloin has been pre-cut, and to hold the diaphragm and organs back while the diaphragm and leaf fat are being loosened by means of a hoop device (fig. 6).

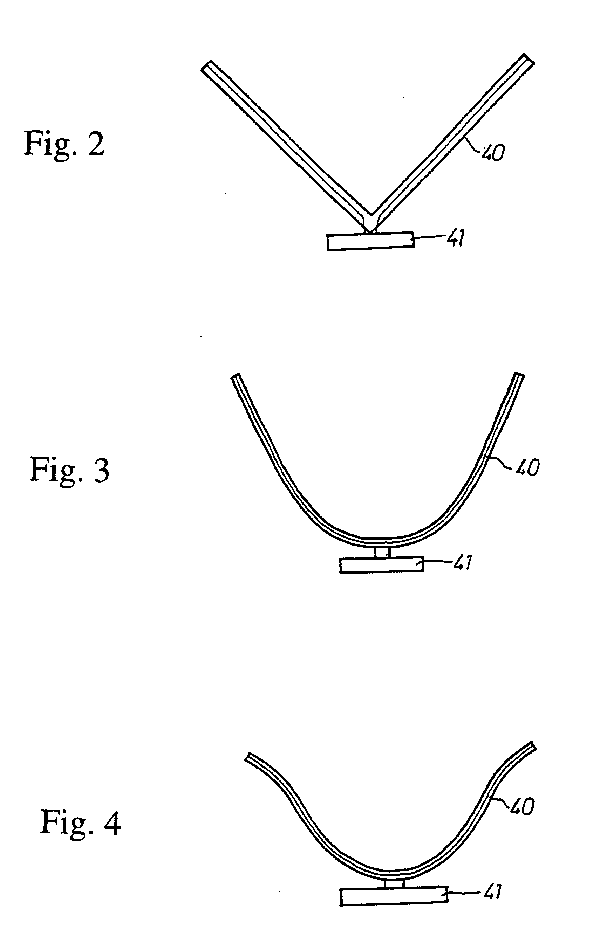

The embodiments shown in figs. 2, and 4 of the knife 31 for pre-cutting the tenderloin along the carcass spinal column have a knife blade 40, substantially in the shape of an angled isosceles triangle with a cutting edge along the two sides. The embodiments have different profiles which may be achieved by bending, machining or other known method. Knife 31 is hinged to holder 32 by means of a pin 41 which is mounted on the blade near the point where the cutting edges meet each other.

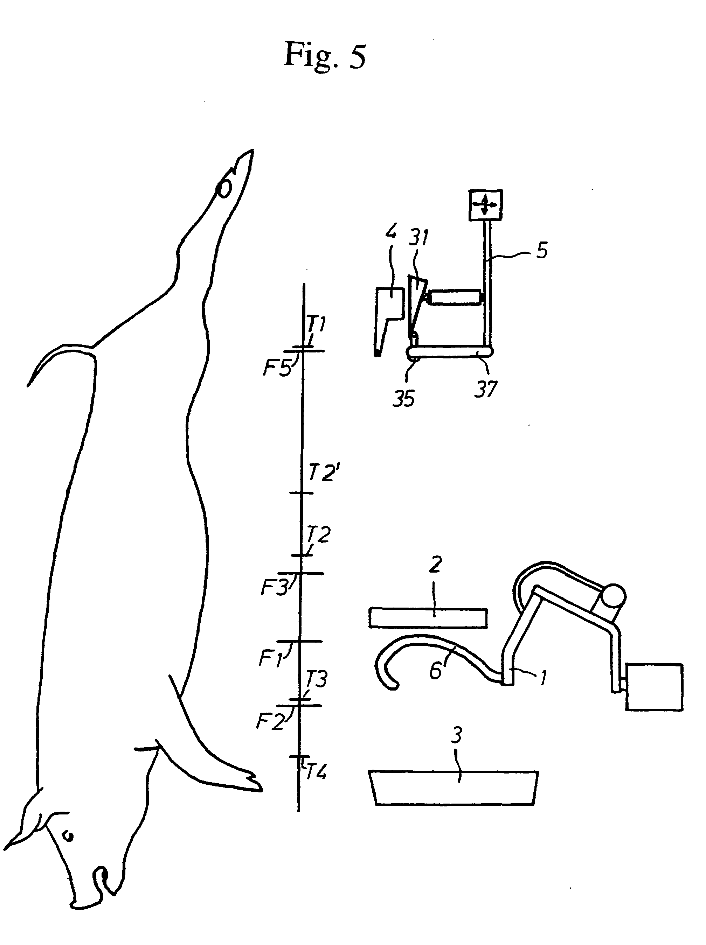

Fig. 5 illustrates the working operations in a work station for mechanic evisceration of a carcass and pre-cutting the tenderloin. The work station is installed on a slaughter line for pig carcasses.

The work station includes various tools, shown schematically on fig. 5 by reference numbers 1 to 5. By means of arrangements not shown, the tools can be moved between the various rest, waiting and working positions. The arrangements can move the tools vertically and horizontally in mainly translatory movements.

Reference no. 1 designates a tool for loosening diaphragm and leaf fat. A shovel-shaped pan 2 serves to lift protruding intestines when hoops of the loosening tool 1 are inserted in the carcass. A conveyor or gut pan 3 has the purpose of catching the set of organs when after loosening and cutting free it falls out of the carcass breast and abdominal opening. There is also a cutting tool 4 for cutting through the connections of the intestines and diaphragm with the spinal column and a tool 5 according to the invention with a knife 31 for pre-cutting the tenderloin and a holding hoop or plate 37 for interacting with the loosening tool 1 when loosening the diaphragm.

The design of loosening tool 1 is shown in more detail in fig. 6. It comprises two half-hoops 6, which are substantially shaped to follow the inside of the carcass. The tips are curved inwards towards the centre and are at a substantial distance from each other in order to avoid damaging the tenderloin. The half-hoops are set at a mutual distance of such a size that the protruding intestines can easily pass through gap "G", when the hoops are moved upwards in the carcass. To the right of gap "G" in the working position shown the tool forms a kind of ring through which protruding organs (intestines) can fall down onto the gut pan below. The tool has a holder for the half-hoops which serves to turn the half-hoops between an insertion position in which the planes of the hoops are parallel and a working position, in which the hoops lie in the same plane.

In each of the hoops is mounted a knife 7 moving forwards and backwards in the part of the hoop which in working position lies adjacent to the diaphragm muscle, immediately within the breast opening. The knives are arranged slightly offset from the centre of the hoop rod, so that the top of the hoop forms a fence which prevents cutting into the leaf fat.

The forwards and backwards motion of the knives is obtained by two motors 7a with eccentrically mounted rods 7b to transfer the motor power to the knives. The knives can be retracted into the hoop rod by means of a cylinder when there is no need for them.

Before a carcass enters the work station for evisceration, several measurement and processing tasks are carried out on the carcass:

The position of one or more anatomical points on the carcass is determined automatically in a measuring station, whereby the distance between the slaughter line conveyor rail and the tools of the work station can be adjusted to the individual carcass. For example, the position of the armpits in relation to the conveyor rail can be determined by equipment described in example 3 of EP 0879 558 A2.

After measurement the carcass is moved to a position in which the abdomen is opened, the fat end loosened and the breast cut open. These operations can be carried out in the traditional manner by operatives. They are preferably to be carried out by means of well-tried fully or semi-automatic equipment available on the market, such as that supplied by Automeat and Stork. After the opening of the abdomen, the intestines are not turned out as in the traditional process. Instead, the intestines are allowed to fall out through the abdominal and breast opening under their own weight until halted by the connections with the spinal column and diaphragm.

After these preliminary operations, the carcass is moved to the work station for evisceration and brought to a stop.

Initially, the loosening tool 1 and the pan 2 are in rest position, in which the tools are retracted from the carcass and are positioned at level F1 (fig. 5), with the pan 2 directly over the half-hoops 6, which are turned so as to be in parallel planes.

The tool 1 and pan 2 are now moved to level F2, which lies just under F1. The pan is then moved in towards the carcass, and when its front edge reaches the surface of the carcass the movement is halted and the pan and tool raised to level F3. In so doing, the pan 2 pushes protruding organs (intestines) away from the area of the breast opening in which the half hoops are to be inserted. Level F3 is determined on the basis of measured values of the distance of the armpits from the conveyor rail and may thus vary from carcass to carcass.

A gripper tool is activated to move in and grip the edges of the breast opening and pull them apart in order to enlarge the breast opening. The tool holds the edges firmly during the following operations.

The half-hoops 6 which are located immediately below the diaphragm are inserted into the carcass until they meet the carcass wall near the spine.

The gut pan 3 is in receiving position a little below the level of the diaphragm.

The half-hoops 6 are turned to lie in the same plane, as shown in fig. 6.

Cutting tool 4 and the cutting/holding tool 5 are at level T1 when at rest. They are in their furthest position from the carcass. Tool 4 is preferably of the design described in greater detail in example 4 of EP 0879 558 A2. It includes a tong-shaped gripper with cutting edges on its inner sides. The gripper is moved towards the carcass spinal column and in open position now begins a downwards movement along the spine, gathering the connections of the intestines with the spinal column in the mouth of the tongs. Once the tool has proceeded through the diaphragm to a position determined by the measurement, it closes and is pulled up, thus cutting through the diaphragm parts at the spinal column and the connections of the latter with the intestines. Finally the intestines fall out of the carcass breast and abdominal openings. The tool 4 is retracted to its starting position at level T1.

The tool 5 of fig. 5 is inserted against the spinal column of the carcass with knife 31 in advanced position. The knife cuts through the fleshy and connective tissue on two sides of the spinal column and finally comes to rest against the spinal column with a pressure determined by unit 33. While the unit is pressing the knife against the spinal column, the tool is moved downwards in the carcass. By this movement, the knife 31 pre-cuts the tenderloin along the whole of its length. At level T2' (fig. 5), the knife swings back into its retracted position in the housing or sheath shown by stippled lines in fig. 1.

The tool 5 of fig. 5 continues the downwards movement and meets the diaphragm with stop face 35 and then with hoop/plate 37. When the reaction force from the diaphragm and organs has become sufficiently high, the movement stops of its own accord, as the device which carries out the vertical movement is able to exert only a defined vertical force or is designed to stop when the resistance exceeds a threshold value. The tool has now reached level T2 of fig. 5, immediately above the level of half-hoops 6.

The forwards and backwards motion of the knives 7 (fig. 6) in the half-hoops 6 is now activated, while at the same time the tool 1 (fig. 5) is moved upwards. In so doing, a pre-cut is made in the diaphragm, so that the diaphragm muscle is cut in the region of the breast bone without the leaf fat being cut through. The knives are then retracted into the hoops into their inactive position.

The pan 2 is then retracted from the carcass into its furthest position, so that the ring opening of the tool 1 outside the carcass becomes accessible to the intestines and other protruding organs.

The set of hoops 6 continues its upwards movement past the mainly stationary holding hoop of tool 5, thus loosening the diaphragm. The set of hoops continues up along the inside of the carcass and up between the hams completely loosening the leaf fat and kidneys from the inside of the carcass. The gap G (fig. 6) and the tool's ring opening enable the tool to pass the protruding intestines without dragging them up. Finally level F5 (fig. 5) is reached at the pubic bone of the carcass, where movement halts. The half-hoops 6 are then pulled out of the carcass and moved away together with the pan 2 for desinfection. During desinfection the loosening tool 1 and pan 2 are moved back to starting position F1.

After the loosening of the diaphragm, the tool 5 is lowered, pulling free the lungs etc. from the inside of the carcass. The movement ceases at level T3, after which the tool is moved horizontally outwards, thus pulling out the lungs etc. The tool then returns to its rest or starting position at level T1.

Obviously, these operations may be carried out wholly or partially in parallel, and may be performed as smooth movements without pauses between the different work stages.

The carcass can be conveyed to a station for manual processing, including cutting out the tongue, division of the intestines and plucks, and suspension of the plucks on the plucks conveyor.

After the carcass has been cooled, an operator can easily pull out the pre-cut tenderloin.

By means of the above working procedures it is possible to remove the set of organs from a pig carcass and at the same time pre-cut the tenderloin automatically. This saves manpower and avoids heavy/repetitious manual work. The device is preferably designed to follow the slaughter line speed, which will normally be 320 to 400 pigs per hour or more.

During the operations mentioned above in the work station, the carcass is brought to a standstill, but it is possible to design a work station such that the tools follow the carcass, performing their work as the carcass is conveyed along the slaughter line.

## Claims

1. Tool for pre-cutting the tenderloin in carcasses which are conveyed on a slaughter line suspended in gambrels or hooks, where the abdomen and breast have been cut open, the hams divided and the fat end loosened, in connection with the evisceration of the carcasses, **characterised in that** the tool comprises a knife (31) with a profiled blade (40).

2. Tool according to claim 1, **characterised in that** it comprises a holder (32) which has a drive unit (33) connected to the knife (31) by means of which unit the knife can be moved between an advanced position and a retracted position in relation to the holder.

3. Tool according to claim 2, **characterised in that** the knife (31) is fixed to the holder by means of a hinge part (34) and that the drive unit (33) is mounted between the holder (32) and the knife (31) at a distance from the hinge part.

4. Tool according to claim 1, **characterised in that** the blade is bent at an angle, or at the least the central part of the blade is curved, preferably as a circular arc.

5. Tool according to claim 2, **characterised in that** the holder (32) has a stop face (35) arranged in front of the knife (31) seen in its direction of movement when pre-cutting the tenderloin from the spinal column.

6. Tool according to claim 2, **characterised in that** the holder (32) has a contact face (38) arranged in front of the knife and lying substantially perpendicular to the knife's direction of movement during pre-cutting.

7. Device for pre-cutting the tenderloin of carcasses which are conveyed on a slaughter line suspended in gambrels or hooks, where the abdomen and breast have been cut open, the hams divided and the fat end loosened, in connection with the evisceration of the carcasses, **characterised in that** the device comprises a knife (31) with a profiled blade (40), a knife holder (32) with a drive unit (33) by means of which unit the knife can be moved between an advanced and a retracted position in relation to the holder (32), and a device (39) attached to the holder which device is arranged to move the tool comprising the knife and the holder in a mainly vertical direction.

8. Device according to claim 7, **characterised in that** it is arranged to halt the movement of the tool comprising the knife and the holder in the mainly vertical direction when the tool moving in the vertical direction meets an obstruction exerting a greater reaction force than its pre-cutting force.

9. Method for pre-cutting the tenderloin of carcasses which are conveyed on a slaughter line suspended in gambrels or hooks, where the abdomen and breast have been cut open, the hams divided and the fat end loosened, in connection with the evisceration of the carcasses, **characterised in that** a knife (31) with a profiled blade (40) is moved in against the spinal column of the carcass, until the knife has cut into the fleshy and connective tissue on two sides of the spinal column, that the knife is moved along the spinal column in the direction of the carcass head, while being pressed against the spinal column and that the movement along the spinal column continues until the tenderloin is pre-cut.

10. Method according to claim 9, **characterised in that** the knife (31) is moved while mounted on a holder (32) with a stop face (35) and that the movement along the spinal column is continued until the stop face meets resistance from the carcass diaphragm (36).

11. Method according to claim 9, **characterised in that** the knife (31) is moved to a retracted position after pre-cutting, and that the knife in its retracted position continues its movement along the spinal column while tools carries out processing operations on the carcass viscera.

12. Method according to claim 9, **characterised in that** the pre-cutting begins after the intestines have been loosened from the spinal column of the carcass and are hanging out of the abdominal cavity.

## Patentansprüche

1. Werkzeug zum Vorschneiden des Lendenstückes an Tierkörpern, die auf einer Schlachtlinie in Fleischhaken oder Mitnehmern aufgehängt gefördert werden, wobei in Verbindung mit dem Entweiden der Tierkörper Bauch und Brust aufgeschnitten, die Schinken geteilt und das Fettende gelöst worden sind, **dadurch gekennzeichnet, daß** das Werkzeug ein Messer (31) mit einer profilierten Klinge (40) umfaßt.

2. Werkzeug nach Anspruch 1, **dadurch gekennzeichnet, daß** es einen Halter (32) umfaßt, der eine mit dem Messer (31) verbundene Antriebseinheit (33) aufweist, mittels der das Messer zwischen einer vorgeschobenen Position und einer zurückgezogenen Position relativ zum Halter bewegt werden kann.

3. Werkzeug nach Anspruch 2, **dadurch gekennzeichnet, daß** das Messer (31) am dem Halter mittels eines Scharnierteils (34) befestigt ist und daß die Antriebseinheit (33) zwischen dem Halter (32) und dem Messer (31) im Abstand zu dem Scharnierteil angebracht ist.

4. Werkzeug nach Anspruch 1, **dadurch gekennzeichnet, daß** die Klinge im Winkel gebogen ist oder mindestens der mittlere Teil der Klinge gekrümmt ist, vorzugsweise als kreisförmiger Bogen.

5. Werkzeug nach Anspruch 2, **dadurch gekennzeichnet, daß** der Halter (32) eine Anschlagfläche (35) aufweist, die, in ihrer Bewegungsrichtung beim Freischneiden des Lendenstückes von der Wirbelsäule betrachtet, vor dem Messer (31) angeordnet ist.

6. Werkzeug nach Anspruch 2, **dadurch gekennzeichnet, daß** der Halter (32) eine Kontaktfläche (38) aufweist, die vor dem Messer angeordnet ist und im wesentlichen senkrecht zur Bewegungsrichtung des Messers während des Vorschneidens liegt.

7. Einrichtung zum Vorschneiden des Lendenstückes von Tierkörpern, die auf einer Schlachtlinie in Fleischhaken oder Mitnehmern aufgehängt gefördert werden, wobei in Verbindung mit dem Entweiden der Tierkörper Bauch und Brust aufgeschnitten, die Schinken geteilt und das Fettende gelöst worden sind, **dadurch gekennzeichnet, daß** die Einrichtung ein Messer (31) mit einer profilierten Klinge (40), einen Messerhalter (32) mit einer Antriebseinheit (33), mittels der das Messer zwischen einer vorgeschobenen und einer zurückgezogenen Position relativ zum Halter (32) bewegt werden kann, und eine Einrichtung (39) umfaßt, die an dem Halter befestigt und angeordnet ist, um das Werkzeug umfassend das Messer und den Halter in einer hauptsächlich vertikalen Richtung zu bewegen.

8. Einrichtung nach Anspruch 7, **dadurch gekennzeichnet, daß** sie angeordnet ist, die Bewegung des Messer und Halter umfassenden Werkzeuges in der hauptsächlich vertikalen Richtung anzuhalten, wenn das sich in der vertikalen Richtung bewegende Werkzeug auf ein Hindernis stößt, das eine stärkere Reaktionskraft als seine Vorschneidkraft ausübt.

9. Verfahren zum Vorschneiden des Lendenstückes an Tierkörpern, die auf einer Schlachtlinie in Fleischhaken oder Mitnehmern aufgehängt gefördert werden, wobei in Verbindung mit dem Entweiden der Tierkörper Bauch und Brust aufgeschnitten, die Schinken geteilt und das Fettende gelöst worden sind, **dadurch gekennzeichnet, daß** ein Messer (31) mit einer profilierten Klinge (40) gegen die Wirbelsäule des Tierkörpers einwärts bewegt wird, bis das Messer in das fleischige und verbindende Gewebe an zwei Seiten der Wirbelsäule eingeschnitten hat, daß das Messer entlang der Wirbelsäule in Richtung des Tierkörperkopfes bewegt wird, während es gegen die Wirbelsäule gedrückt wird, und daß die Bewegung entlang der Wirbelsäule fortdauert, bis das Lendenstück vorgeschnitten ist.

10. Verfahren nach Anspruch 9, **dadurch gekennzeichnet, daß** das Messer (31) bewegt wird, während es auf einem Halter (32) mit einer Anschlagfläche (35) gelagert ist, und daß die Bewegung entlang der Wirbelsäule fortgeführt wird, bis die Anschlagfläche auf Widerstand von dem Tierkörper-Diaphragma (36) trifft.

11. Verfahren nach Anspruch 9, **dadurch gekennzeichnet, daß** das Messer (31) nach Vorschneiden auf eine zurückgezogene Position bewegt wird und daß das Messer in seiner zurückgezogenen Position seine Bewegung entlang der Wirbelsäule fortführt, während Werkzeuge Bearbeitungstätigkeiten an den Eingeweiden des Tierkörpers durchführen.

12. Verfahren nach Anspruch 9, **dadurch gekennzeichnet, daß** das Vorschneiden beginnt, nachdem das Gedärm von der Wirbelsäule des Tierkörpers gelöst worden ist und aus der Bauchhöhle heraushängt.

## Revendications

1. Outil pour la pré-découpe du filet dans des carcasses qui sont convoyées sur une chaîne d'abattage suspendues à des crocs à viande ou à des crochets, dans lesquelles l'abdomen et la poitrine ont été découpés et ouverts, les jambons partagés en morceaux et l'extrémité grasse séparée, en liaison avec l'éviscération des carcasses, **caractérisé en ce qu'**il comprend un couteau (31) avec une lame profilée (40).

2. Outil selon la revendication 1 **caractérisé en ce qu'**il comporte un porte - outil (32) qui possède une unité d'entraînement (33) reliée au couteau (31), au moyen duquel le couteau peut être déplacé entre une position avancée et une position rétractée en relation avec le porte-outil.

3. Outil selon la revendication 2 **caractérisé en ce que** le couteau (31) est fixé au porte-outil au moyen d'une partie charnière (34) et **en ce que** l'unité d'entraînement (33) est montée entre le porte- outil (32) et le couteau (31) à une distance de la partie charnière.

4. Outil selon la revendication 1 **caractérisé en ce que** la lame est courbée en formant un angle, ou au moins la partie centrale de la lame est incurvée, de préférence en formant un arc circulaire.

5. Outil selon la revendication 2 **caractérisé en ce que** le porte- outil (32) présente une face de butée (35) agencée devant le couteau (31) vu dans sa direction de déplacement lorsqu'on pré- découpe le filet à partir de la colonne vertébrale.

6. Outil selon la revendication 2 **caractérisé en ce que** le porte- outil (32) présente une face de contact (38) agencée devant le couteau et se situant sensiblement perpendiculaire à la direction de déplacement du couteau durant la pré- découpe.

7. Dispositif pour la pré- découpe du filet de carcasses qui sont convoyées sur une chaîne d'abattage suspendues à des crocs à viande ou à des crochets, dans lesquelles l'abdomen et la poitrine ont été découpés et ouverts, les jambons partagés en morceaux et l'extrémité grasse séparée, en liaison avec l'éviscération des carcasses, **caractérisé en ce que** le dispositif comporte un couteau (31) avec une lame profilée (40), un porte-couteau (32) avec une unité d'entraînement (33) au moyen de laquelle unité le couteau peut être déplacé entre une position avancée et une position rétractée en relation avec le porte-outil (32), et un dispositif (39) attaché au porte-outil, lequel dispositif est agencé pour déplacer l'outil comprenant le couteau et le porte-outil dans une direction principalement verticale.

8. Dispositif selon la revendication 7 **caractérisé en ce qu'**il est agencé pour arrêter le déplacement de l'outil comprenant le couteau et le porte - outil dans la direction principalement verticale quand l'outil se déplaçant dans la position verticale rencontre une obstruction exerçant une force de réaction plus grande que sa force de pré-découpe

9. Procédé de pré-découpe du filet de carcasses qui sont convoyées sur une chaîne d'abattage suspendues à des crocs à viande ou à des crochets, dans lesquelles l'abdomen et la poitrine ont été découpés et ouverts, les jambons partagés en morceaux et l'extrémité grasse séparée, en liaison avec l'éviscération des carcasses, **caractérisé en ce qu'**un couteau (31) avec une lame profilée (40) est déplacé contre la colonne vertébrale de la carcasse jusqu'à ce que le couteau ait coupé dans le tissu charnu et conjonctif sur deux côtés de la colonne vertébrale, **en ce que** le couteau est déplacé le long de la colonne vertébrale dans la direction de la tête de la carcasse tandis qu'il est pressé contre la colonne vertébrale, et **en ce que** le déplacement le long de la colonne vertébrale continue jusqu'à ce que le filet soit pré- découpé.

10. Procédé selon la revendication 9 **caractérisé en ce que** le couteau (31) est déplacé tandis qu'il est monté sur un porte- outil (32) avec une face de butée (35), et que le déplacement le long de la colonne vertébrale est poursuivi jusqu'à ce que la face de butée rencontre une résistance du diaphragme (36) de la carcasse.

11. Procédé selon la revendication 9 **caractérisé en ce que** le couteau (31) est déplacé jusqu'à une position rétractée après pré-découpe, et **en ce que** dans sa position rétractée le couteau continue son déplacement le long de la colonne vertébrale tandis que l'outil exécute des opérations de traitement sur les viscères de la carcasse.

12. Procédé selon la revendication 9 **caractérisé en ce que** la pré-découpe commence après que les intestins aient été séparés de la colonne vertébrale de la carcasse et soient suspendus hors de la cavité abdominale.
